# EUROPEAN PATENT SPECIFICATION

(11) **EP 1 497 565 B1**
(45) Date of publication and mention of the grant of the patent: **13.06.2007**
(21) Application number: 03720438.5
(22) Date of filing: 09.04.2003
(51) Int. Cl.: F16B 19/10

(54) **BLIND RIVET**
BLINDNIETE
RIVET AVEUGLE

(30) Priority: 23.04.2002 GB 0209144
(43) Date of publication of application: 19.01.2005
(73) Proprietor: Newfrey LLC, Newark, Delaware 19711 (US)
(72) Inventor: Jones, Steven Victor, Great Barr, Birmingham B43 5LN (GB)
(74) Representative: Haar, Lucas Heinz Jörn
(86) International application number: PCT/EP2003/003650
(87) International publication number: WO 2003/091580

(56) References cited:
- EP-A- 0 677 666
- GB-A- 876 255
- GB-A- 2 332 722
- US-A- 5 183 357

## Description

The present invention relates to an improved blind rivet, more particularly to a peel-type blind rivet which is particularly suitable for anchoring in relatively soft materials such as wood or plastics.

Conventional blind riveting techniques which are normally used to secure together two or more workpieces, utilise a blind rivet having a tubular shank with an enlarged head at the operative end thereof such that the shank can pass through a preformed hole in extending between two workpieces, whereby a mandrel disposed within the tubular rivet body having an enlarged head is then used to compress the rivet body on the blind side (ie. behind the workpieces to be set) to create a bulge which will compress the workpieces against the enlarged head.

However, where the blind side workpiece material is both of substantial thickness and is relatively soft, modified peel-type blind rivets have been employed which operate in a significantly different manner whereby the end of the rivet body, remote from the head (the blind side), is caused to split and form into a series of radially extending legs which compress and engage with the soft material into which the peel-type blind rivet has been displaced, whereby these legs are restrained remote from the head-end of the rivet, once set, by providing appropriate means to arrest continued splitting or deformation of such legs. Existing peel-type blind rivets are divided into two distinct groups, the first of which has its body provided with a weakened region which will either be cut to form the required legs by cutting edges formed on the mandrel head, or have preformed, weakened zones (such as channels) within the rivet body along which the body will rupture when the mandrel head is drawn into the rivet body. These type of rivets normally employ a dual thickness rivet body whereby the weakened regions are of a reduced thickness as compared to the main rivet body such that continued splitting of the rivet is arrested when the mandrel head engages with the thickened portion of the rivet body. Blind rivets of this type are discussed in EP-A-344,005 and EP-A-328,314.

An alternative preferred form of peel-type blind rivet employs the use of preformed slots formed in the remote end (opposed to the rivet head) of the rivet body, which slots define the legs to be displaced during the setting operation. One example of a peel-type blind rivet of this type is disclosed in the applicants earlier British Patent No. GB-A-2332722.

However, all of these existing types of peel-type blind rivet require an inclined shoulder formed between the mandrel head and the mandrel shank to engage with and deform the legs outwardly of the rivet, which requires precision engineering in the formation of such rivet mandrels whilst the inclined nature of such shoulders result in the legs becoming deformed and caused to curve or bend whilst being displaced into a set position, such curvature providing less resistance to an applied load, and thereby reducing the strength of the rivet set.

It is therefore an object of the present invention is to alleviate some of the aforementioned problems of existing peel type blind rivets and to provide an improved peel-type blind rivet.

According to the present invention there is now provided a peel-type blind rivet assembly for setting in relatively soft material, this rivet assembly comprising:
an elongate tubular body having a shank disposed about a shank axis and a preformed head at a first end thereof and an expandable portion at the opposed end of the shank, remote from the head and formed by a plurality of elongate slots, which slots terminate remote from the first end;
a mandrel having a stem extending through and co-axial with the tubular body, which mandrel further having a head having a maximum external diameter greater than the internal diameter of the body (Peel type blind rivet assembly of the type disclosed in GB-A-2 332 722), characterised in that
the mandrel head forms a shoulder between a mandrel stem and an outer surface of the mandrel head to engage with the expandable portion of said shank, which shoulder extends perpendicular to the shank axis, and wherein at least one of the plurality of slots increases in width as it extends from an outer surface to an inner surface of the body such that, in cross-section, this slot is seen to taper towards the outer periphery of the rivet body.

Usually, the opposed end of the shank will present a flat surface, perpendicular to the shank axis, for the mandrel shoulder to fit flush therewith.

It is possible that the side walls of the at least one slot will be curved, preferably so as to be convex.

Usually each of the plurality of slots will be equally spaced about the circumference of the tubular body so that the angular displacement between adjacent slots about the shank axis is constant.

Preferably, the rivet body will comprise three slots disposed substantially at 120° intervals relative to the shank axis.

In addition, it is preferred that an inner end of at least one of the plurality of slots is axially inclined so that at least one slot is longer adjacent to the inner surface of the body than adjacent the outer surface of the body.

Usually, the wall thickness of the body will be constant along its axial length and will also have a constant external diameter along such axial length.

In addition, it is preferred that the mandrel stem will have a reduced diameter section adjacent to the shoulder to form a recess within the mandrel stem so that material displaced from the rivet body during the setting operation may be deformed into this recess to restrain the set mandrel head following the setting operation of the rivet.

It is preferred that the maximum diameter of the mandrel head is equal to the external diameter of the shank so that the preformed hole into which the rivet is to be inserted need only be sufficient to receive the diameter of the rivet shank.

There will now be described, by way of example only, a preferred embodiment of the present invention with reference to the accompanying illustrative drawings in which:

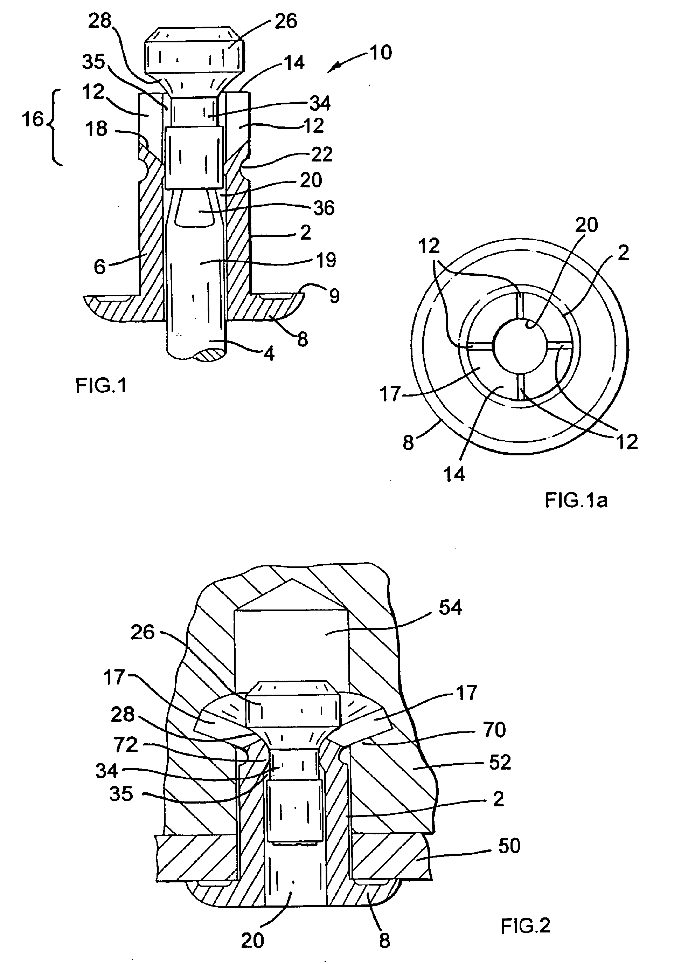

Figure 1 shows a partial cross-sectional view of a peel-type blind rivet according to the prior art; and
Figure 1 a is an end view of the rivet body of Figure 1; and
Figure 2 is a partial cross-section of the rivet of Figure 1 shown in a set position; and
Figure 3 shows a partial cross-section of a peel type blind rivet according to the present invention; and
Figure 4 is a plan view from one end of the body of the blind rivet of Figure 3; and
Figure 5 shows the peel-type blind rivet of Figure 3 in a set configuration; and
Figure 6 is a plan view of the shank of a peel-type blind rivet according to a second embodiment of the present invention; and
Figure 7a shows a plan view from one end of a punch tool used to form the body of the blind rivet of Figure 3; and
Figure 7b is a side view of the punch tool of Figure 7a when viewed along the arrow X; and
Figure 7c is a side view of an alternative embodiment of the punch tool of Figure 7a.

A peel-type blind rivet assembly (10), according to the prior art disclosed in GB-A-2 332 722, is seen in Figure 1. This blind rivet assembly (10) comprises a tubular body (2) containing a mandrel (4), and having a head (8) formed by a flattened flange portion, presenting a circumferential shoulder (9) for engagement with a first workpiece. Four equally spaced elongate slots (12) are provided in the end (14) of the shank (6) remote from the head (8) and provide an expandable portion (16) of the shank, dividing this expandable end portion into four distinct legs (17) therebetween. The base (18) of each slot (longitudinally remote from an end (14) of the shank) is axially inclined relative to an axis of the shank such that the length of the slot is longer where it is adjacent to the inner surface of the body (adjacent to the bore (20)) and is of a shorter longitudinal length where it is adjacent to the outer surface of the body.

The mandrel (4) is of conventional design comprising a head (26) having an underhead portion (28) which increases progressively in diameter from the mandrel stem (19) towards the maximum diameter of the mandrel head (26). In this embodiment the underhead shape (28) provides a radially inclined shoulder portion. Adjacent to the shoulder portion (28) the mandrel stem has a narrowed portion (34) forming an effective recess (35) adjacent to the mandrel head.

The mandrel stem is further provided with a breakneck (36), as is conventional to blind rivets, and effectively comprises a narrowed neck portion designed to break when a predetermined load is applied across this weakened region.

Figure 2 shows the rivet assembly (10) in a set configuration when used in a particular application in a soft material. Here, the prior art peel-type blind rivet assembly (10) is used to restrain a first, relatively thin, workpiece (50) (usually of metal) onto a relatively thick, considerably softer workpiece (52) which will usually be wood or plastics material. The first workpiece (50) is placed adjacent to the second workpiece (52) and a hole (54) formed therebetween, usually by a drill. The rivet assembly (10) is then inserted into the hole (54) so that the shoulder (9) of the rivet head (8) engages with the outer surface of the workpiece (50). The rivet is then set in a conventional manner of setting a blind rivet (ie. by pulling the mandrel (4) downwardly as viewed in Figure 1) whilst restraining displacement of the mandrel head (8) using a conventional rivet setting tool. As the rivet is set, the curved shoulder portion (28) beneath the mandrel head (26) engages with the weakened tail region (16) of the rivet body (2) so that the separate legs (17) of the weakened region (16) are displaced outwardly from the rivet body (2) and so as to cut through and into the second workpiece (52) effectively compressing the soft material (70) which has been displaced by such cutting action.

This prior art embodiment further includes a circumferential groove (22) which has been preformed in the rivet body so as to be adjacent to the bases (18) of the slots (12), whereby the legs (17) of the deformed rivet body tend to bend about such groove (22). Furthermore, the legs (17) themselves are further bent or curved by the radial forces applied by the radial shoulder (28) as it engages the legs during the bending or deforming operation.

As the head (26) of the mandrel (4) is displaced towards the head (8) of the rivet body (2), the setting load increases due to the increased resistance as the head approaches the groove (22) and the increased setting load serves to help collapse the groove (22) causing rivet body material adjacent to the groove (22) to be displaced inwardly into the recess (35) about the mandrel stem, thus locking the mandrel head (26) in engagement with the set rivet body. The setting load continues to increase until the rivet fails at the breakneck (36) in a conventional manner. In this embodiment the mandrel head is thus retained within the set rivet.

Whilst the prior art device performs adequately, it has been determined that the curved nature of the deformed legs (17) in the set configuration (arising from bending thereof caused by the interaction with the curved shoulder (28) of the mandrel head (26)) results from anticlastic flow of material on the inner surface of such legs as they are stretched into the curved configuration shows in Figure 2. This results in the leg portions becoming slightly thinner than the main rivet body thickness and thus such deformed legs are thinner and weaker than the main, undeformed, region of the shank.

In addition, this prior art device comprises an additional manufacturing step in forming the indentation (22) which is able to react with the curved shoulder (28) to cause the rivet body material (72) to flow into the recess (35) to effect restraint of the mandrel head in the set rivet.

It will also be understood that, as the legs of the rivet body (2) bend during setting, the inner surface of the legs tend to increase in length. Material from the rivet body to accommodate this stretching will be provided from the section of the leg at that point in a movement known as anticlastic movement. This, in order to assist the movement of this material without creating undue stress, the base (18) of the slots (12) are inclined as shown in Figure 1.

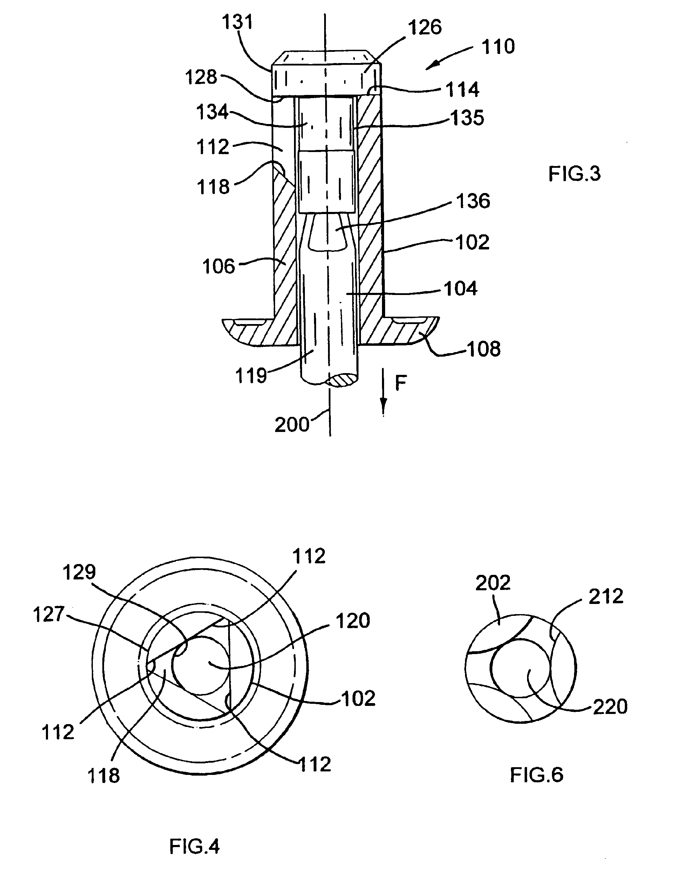

The preferred embodiment of the present invention is now shown in Figure 3 and is effectively a modified version of the prior art peel-type blind rivet (10) as shown in Figure 1 and like parts of the rivet assembly of the present invention will now be identified by the same reference numbers to those used in Figure 1 but will include the prefix (1) or (10) for distinction.

Figure 3 shows a modified peel-type blind rivet assembly (110) of substantially similar configuration to the rivet assembly (10) and again comprises a tubular body (102) with a similar mandrel (104). The rivet body head (108), mandrel breakneck (136) and mandrel shank (106) are substantially identical to those shown in Figure 1. Again the mandrel comprises a mandrel head (126) and the mandrel stem has a recess portion (134) adjacent to this mandrel head to form a recess (135) again similar to that discussed with reference to Figure 1.

The significant difference of the blind rivet assembly (110) resides in the shoulder portion (128) extending between the mandrel stem (119) and the maximum outer diameter (131)of the mandrel head (126). As seen in Figure 3, this shoulder portion (128) is substantially perpendicular to the rivet axis (200) and presents a substantially flat face for flush engagement with a substantially flat end surface (114) of the rivet body (102). Formation of such a mandrel is considerably simplified to that of the mandrel (4) as seen in Figure 1.

The second notable modification to the rivet assembly (110) is that the shank (106) is of constant diameter along its entire axial length and of constant thickness (in particular, there is no groove portion as seen in the rivet assembly (10)), thereby negating the additional manufacturing step involved in the creation of such a groove.

In addition, in the preferred embodiment of the rivet assembly of the present invention (110) shown in Figures 3 and Figures 4, the rivet body (102) has three longitudinally extending slots (112) extending inwardly from the end (114) of the rivet body remote from the head (108) (as opposed to four in Figure 1) and, as particularly seen in Figure 4, these slots (112) increase in width from an outer surface (127) of the shank (106) towards an inner surface (129) of the rivet body (102) (which surface (129) defining the rivet bore (120)). Also, as seen in Figure 3, the assembly (110) has bases (118) of the slots (112) which are again inclined inwardly from the outer surface (127) of the body (102) towards the inner surface (129) of such body. In this manner, the slots (112) are longer adjacent to the inner surface (129) of the rivet body (102) than when adjacent to the outer surface (127) of the body (102). However, this is an optional feature and these bases (118) may in fact be flat (or substantially perpendicular to the rivet axis (200)) .

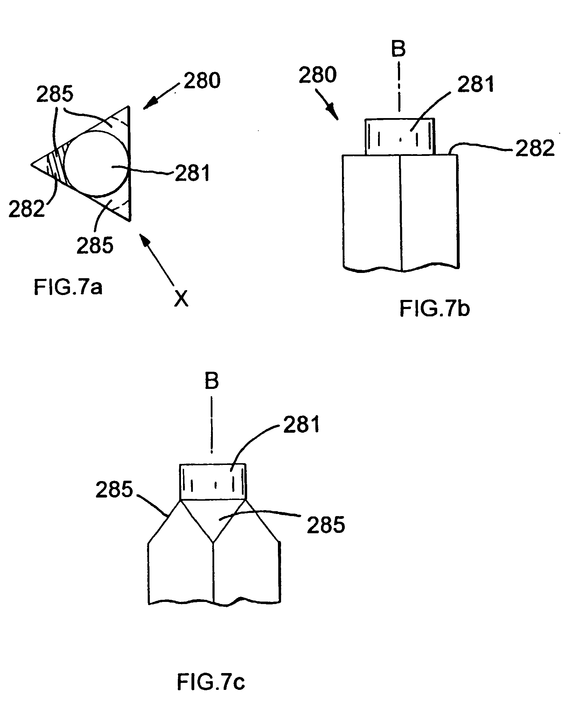

The slots (112) provide a significant advantage over the prior art slots (12) of Figure 1 in providing for an improved manufacturing process. In particular and with reference to Figure 7a and 7b, a more robust metal extrusion punch (280) can be used in the formation of these slots (112) and, hence, the rivet body (102). Firstly, referring back to the rivet assembly (10) shown in Figure 1a, it will be appreciated that the metal extrusion punch required to form the grooves (12) will comprise a cylindrical support body (to be received within the bore (20) of the tubular rivet body (2)) with four perpendicular narrow cutting blades extending from this cylindrical tube for engaging the rivet body (102) to effectively cut the elongate slots (12) along such body (2) as the punch is passed through the bore (20). Both the formation of such a extrusion punch is relatively complex due to the relatively thin projections extending therefrom, and these relatively thin projections are subject to comparatively high stresses and are subject to significant wear and damage.

However, referring back to Figure 7a, the extrusion punch (280) developed for the current invention is considerably simplified and comprises a triangular extrusion punch which, in the embodiment shown in Figure 7a, has an axially extending location cylinder (281) extending from an end face thereof. The location cylinder (281) is of corresponding size to the bore (120) of the rivet body (102) of Figure 3 and serves to locate the punch (280) centrally of the rivet body. As such, a substantially flat end face (282) of the elongate punch (280) comprises three cutting elements (285) each formed as a convergence zone on this end face formed by the tapering convergence of two adjacent side walls of the punch. This convergence zone (282) (shown as a shaded region in Figure 7a) may be considered as the surface of the end face (282) formed between adjacent side walls of the punch (280) which, when aligned with the rivet body (102) are aligned with the shank walls so as to engage the end face (114). As shown in Figure 7a this region is defined as the face area between the projection (281) and the dotted lines indicating the outer diameter of the shank (106). As such, it will be appreciated here that whilst for ease of manufacturing the punch (280) is shown to have a triangular cross-section, the apex of this cross-section formed by the exact intersection of the side walls could be omitted since such apex does not actually engage with the rivet body during the punch operation. However, removal of such ends would involve an additional manufacturing step and is unnecessary. What is clear, is that the cutting elements (285) are not necessarily formed in the end face at the exact apex of the converging side faces but may be set slightly back from such apex. However, it is the convergence zone of the side faces which forms the appropriate cutting element.

In addition, it will be appreciated that in the embodiment shown in Figure 7a and 7b the punch (280) is provided with a substantially flat end face (282) extending perpendicular to an axis (B) of such a punch, which will form substantially flat bases (18) of the slots (112) during the slot forming operation. Alternatively, the cutting elements (285) could be inclined relative to the axis (B) of the punch (280) as shown in the alternative embodiment as shown in Figure 7c, so as to form the inclined bases (118) of the slots (112) of the embodiment of Figure 3. It will be further appreciated the projection (281) could, if required, be omitted and alternative alignment means between the punch (280) and rivet body (102) employed.

In operation, the rivet body (102) is formed in a conventional manner following which the extrusion punch (280) is engaged with the free end (114) thereof so as to form the slots (112) as shown in Figure 4. This improved punch (280) is more readily manufactured as a simple polygonal shape providing for greater strength since its cutting elements are considerably larger and more robust than those utilised in the prior art. Since this punch is more robust and easier to manufacture, it results in a reduction in production costs of such tools and is less prone to wear and failure.

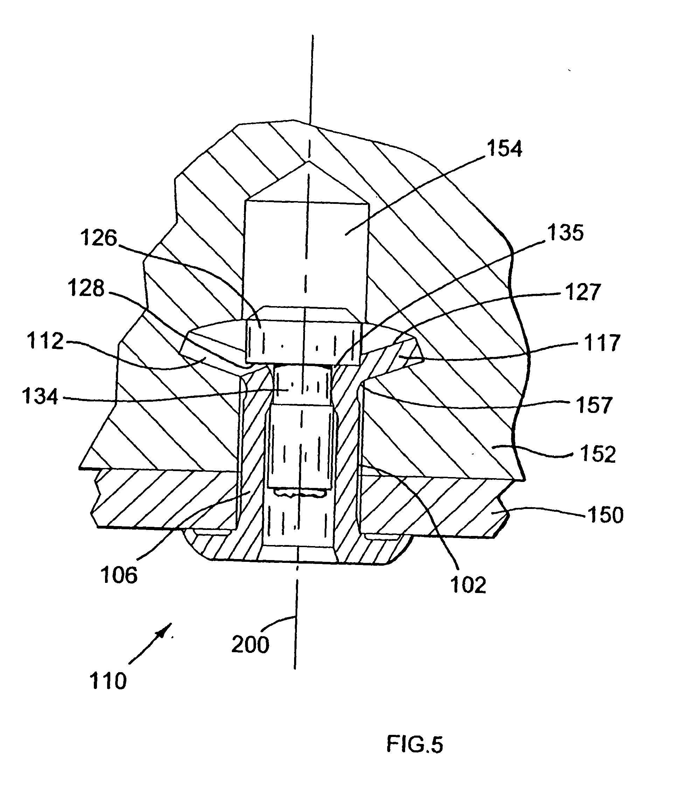

Referring now to Figure 5, showing the rivet assembly (110) in its set configuration, the manner of setting the rivet (110) is substantially identical to that of rivet assembly (10), whereby again the mandrel (104) is engaged by a rivet setting tool and displaced relative to the rivet body (106) once the rivet assembly (110) has been inserted in a preformed hole (154). However, the specific performance of the improved rivet assembly (110) will now be described.

As a setting load is applied (in a direction illustrated by arrow (F) in Figure 3) a compressive load is exerted by the flat shoulder (128) of the mandrel head (126) onto the corresponding flat end (114) of the rivet body, causing the legs (117) (defined between the array of slots (112)) to resiliently deform and to be splayed radially outward of the body (102) until the shoulder (128) engages with the inner surface (127) of these splayed legs (117). In this manner, there is now a linear displacement force created by linear engagement of the linear (non-curved) shoulder (128) with this inner surface (127) so that the legs are displaced in a cantilever manner about their engagement portion (157) with the main part of the shank (106). Here, the legs (117) are not themselves bent during this setting operation but are maintained in their original straight configuration and thus do not undergo any stretching or anticlastic deformation. In this way the set legs shown in Figure 5 are considerably stronger than those shown for the prior art embodiment shown in Figure 2, whilst the legs (117) themselves are still splayed so as to cut through the softer workpiece (normally wood) (52) in a similar manner to that shown in Figure 2 to compress the material between these legs and the outer workpiece (150). These non-deformed legs (117) retain their original thickness following setting and not being curved, so as to be stronger than those of the prior art and, as seen in Figure 5, which could be prone to deformation if a pull out force is applied to the set rivet.

As the mandrel head (126) is again displaced further into the rivet body (106) towards the head (108), the setting load increases due to the increased resistance incurred by the mandrel head (126) towards the end (118) of the slots (112), due to the main shank (106) of the body (102) being resistant to radial deformation since it does not have slots (112) extending therethrough. As this setting load increases, the substantially flat shoulder (128) of the mandrel head (126) is no longer able to apply a radial displacement force to the legs (117) and thus effects a compressive force on the rivet body (in direction F) causing flow of the rivet body material into the recess portion (135) formed about the narrowed section (136) of the mandrel stem to again effect engagement between the mandrel head and the rivet body in the set position. Increased loading force on the mandrel will then result in the mandrel failing at the breakneck (136) in a conventional manner. This modified assembly (110) provides additional strength in comparison to the prior art resulting from the cantilevered displacement of the performed legs (117) during the setting operation, thereby maintaining the thickness of the leg sections to be the same as the thickness of the main rivet body wall following the setting operation, providing greater sectional strength.

Whilst this preferred embodiment shown in Figures 3 to 5 has utilised the formation of three slots (112) to form three corresponding legs (117) of equal size (such slots being displaced at equal angles about the axis of the rivet), it will be appreciated that alternative numbers of legs and associated slots could be employed. If four slots were required to form four legs, then a substantially square punch could be employed, utilising the invention as discussed with relation to the setting tool (280) shown in Figure 7. If required, higher polygonal numbers could also be employed by using punches having hexagonal or higher order cross sectional configurations. In addition, whilst the punch design according to the present invention comprises regular polygons as shown in Figure 7, the side faces of such punches need not be straight but could be curved to produce curved side walls of slots (212) within the rivet body (202), as shown in the alternative embodiment in Figure 6 which have been formed by a substantially concave triangular punch to produce convex edges to the tapered slots (212) in such embodiment.

## Claims

1. A peel type blind rivet assembly (110) for setting in relatively soft material, said rivet assembly comprising:
an elongate tubular body (102) having a shank (106) disposed about a shank axis (200) and a preformed head (108) at a first end thereof and an expandable portion at the opposed end of the shank (106) remote from the head (108) formed by a plurality of elongate slots (112), which slots (112) terminate remote from said first end;
a mandrel (104) having a stem (119) extending through and co-axial with said tubular body (102), which mandrel (104) further having a head (126) having a maximum external diameter greater than the internal diameter of the body (102); **characterised in that**
said mandrel head (126) forms a shoulder (128) between said mandrel stem (119) and an outer surface (131) of said mandrel head (126) to engage with the expandable portion of said shank (106), which shoulder (128) extends perpendicular to said shank axis (200), and wherein at least one of said plurality of slots (112) increases in width as it extends from an outer surface to an inner surface of said body (102),

2. A blind rivet assembly as claimed in claim 1 wherein said opposed end of said shank (106) presents a flat surface (114), perpendicular to said shank axis (200).

3. A blind rivet assembly as claimed in either of the preceding claims wherein the side walls of said at least one slot (212) are curved.

4. A blind rivet assembly as claimed in any one of the preceding claims wherein each of said plurality of slots (112) are equally spaced about the circumference of said tubular body (102) so that the angular displacement between adjacent slots (112) about the shank axis (200) is constant.

5. A blind rivet assembly as claimed in any one of the preceding claims wherein an inner end (118) of at least one of said plurality of slots (112) is axially inclined so that said at least one slot (112) is longer adjacent an inner surface of said body (102) than adjacent an outer surface of said body (102).

6. A blind rivet assembly as claimed in any one of the preceding claims wherein the wall thickness of said body (102) is constant along its axial length.

7. A blind rivet assembly as claimed in claim 6 wherein the external diameter of said body (102) is constant along its axial length.

8. A blind rivet assembly as claimed in any one of the preceding claims wherein said mandrel stem (119) has a reduced diameter section (135) adjacent said shoulder (128).

9. A blind rivet assembly as claimed in any one of the preceding claims wherein said maximum diameter of said mandrel head (126) is equal to the external diameter of said shank (106).

## Patentansprüche

1. Blindnietbaugruppe (110) vom Abschältyp zum Setzen in relativ weichem Material, wobei die Nietbaugruppe folgendes umfaßt:
einen länglichen rohrförmigen Körper (102) mit einem um eine Schaftachse (200) angeordneten Schaft (106) und einem vorgeformten Kopf (108) an einem ersten Ende davon und einem aufweitbaren Abschnitt an dem entgegengesetzten Ende des Schafts (106), das von dem durch mehrere längliche Schlitze (112) ausgebildeten Kopf (108) entfernt ist, wobei die Schlitze (112) entfernt von dem ersten Ende enden;
einen Dorn (104) mit einem Schaft (119), der sich durch den rohrförmigen Körper (102) erstreckt und damit koaxial ist, wobei der Dorn (104) weiterhin einen Kopf (126) mit einem maximalen Außendurchmesser aufweist, der größer ist als der Innendurchmesser des Körpers (102), **dadurch gekennzeichnet, daß**
der Dornkopf (126) zwischen dem Dornschaft (119) und einer äußeren Oberfläche (131) des Dornkopfs (126) zur Ineingriffnahme mit dem aufweitbaren Abschnitt des Schafts (106) eine Schulter (128) bildet, wobei sich die Schulter (128) senkrecht zu der Schaftachse (200) erstreckt, und wobei mindestens einer der mehreren Schlitze (112) an Breite zunimmt, wobei er sich von einer äußeren Oberfläche zu einer inneren Oberfläche des Körpers (102) erstreckt.

2. Blindnietbaugruppe nach Anspruch 1, wobei das entgegengesetzte Ende des Schafts (106) eine flache, zu der Schaftachse (200) senkrechte Oberfläche (114) bildet.

3. Blindnietbaugruppe nach einem der vorhergehenden Ansprüche, wobei die Seitenwände des mindestens einen Schlitzes (212) gekrümmt sind.

4. Blindnietbaugruppe nach einem der vorhergehenden Ansprüche, wobei jeder der mehreren Schlitze (112) gleichmäßig um den Umfang des rohrförmigen Körpers (102) herum so angeordnet sind, daß der Winkelabstand um die Schaftachse (200) zwischen benachbarten Schlitzen (112) konstant ist.

5. Blindnietbaugruppe nach einem der vorhergehenden Ansprüche, wobei ein inneres Ende (118) von mindestens einem der mehreren Schlitze (112) axial so geneigt ist, daß der mindestens eine Schlitz (112) neben einer inneren Oberfläche des Körpers (102) länger ist als neben einer äußeren Oberfläche des Körpers (102).

6. Blindnietbaugruppe nach einem der vorhergehenden Ansprüche, wobei die Wanddicke des Körpers (102) entlang seiner axialen Länge konstant ist.

7. Blindnietbaugruppe nach Anspruch 6, wobei der Außendurchmesser des Körpers (102) entlang seiner axialen Länge konstant ist.

8. Blindnietbaugruppe nach einem der vorhergehenden Ansprüche, wobei der Dornschaft (119) neben der Schulter (128) eine Abschnitt (135) mit reduziertem Durchmesser aufweist.

9. Blindnietbaugruppe nach einem der vorhergehenden Ansprüche, wobei der maximale Durchmesser des Dornkopfs (126) gleich dem Außendurchmesser des Schafts (106) ist.

## Revendications

1. Ensemble formant rivet aveugle de type Peel (110) destiné à être posé dans un matériau relativement mou, ledit ensemble formant rivet comportant :
un corps tubulaire allongé (102) ayant une tige (106) disposée autour d'un axe de tige (200), et une tête préformée (108) à une première extrémité de celui-ci, et une partie dilatable à l'extrémité opposée de la tige (106) éloignée de la tête (108) formée par une pluralité de fentes allongées (112), lesquelles fentes (112) se terminent à distance de ladite première extrémité,
un mandrin (104) ayant une tige (119) s'étendant à travers ledit corps tubulaire (102), et coaxiale à celui-ci, mandrin (104) ayant en outre une tête (126) ayant un diamètre extérieur maximum supérieur au diamètre intérieur du corps (102),
**caractérisé en ce que**
ladite tête de mandrin (126) forme un épaulement (128) entre ladite tige de mandrin (119) et une surface extérieure (131) de ladite tête de mandrin (126) pour venir en prise avec la partie dilatable de ladite tige (106), lequel épaulement (128) s'étend perpendiculaire audit axe de tige (200), et dans lequel au moins une de ladite pluralité de fentes (112) a une largeur qui augmente lorsqu'elle s'étend depuis une surface extérieure vers une surface intérieure dudit corps (102).

2. Ensemble formant rivet aveugle selon la revendication 1, dans lequel ladite extrémité opposée de ladite tige (106) présente une surface plate (114) perpendiculaire audit axe de tige (200).

3. Ensemble formant rivet aveugle selon l'une quelconque des revendications précédentes, dans lequel les parois latérales de ladite au moins une fente (212) sont incurvées.

4. Ensemble formant rivet aveugle selon l'une quelconque des revendications précédentes, dans lequel ladite pluralité de fentes (112) sont chacune espacées de manière égale autour de la circonférence dudit corps tubulaire (102), de sorte que le déplacement angulaire entre des fentes adjacentes (112) autour de l'axe de tige (200) est constant.

5. Ensemble formant rivet aveugle selon l'une quelconque des revendications précédentes, dans lequel une extrémité intérieure (118) d'au moins une de ladite pluralité de fentes (112) est inclinée axialement de sorte que ladite au moins une fente (112) est plus longue en un endroit adjacent à une surface intérieure dudit corps (102) qu'en un endroit adjacent à une surface extérieure dudit corps (102).

6. Ensemble formant rivet aveugle selon l'une quelconque des revendications précédentes, dans lequel l'épaisseur de paroi dudit corps (102) est constante le long de sa longueur axiale.

7. Ensemble formant rivet aveugle selon la revendication 6, dans lequel le diamètre extérieur dudit corps (102) est constant le long de sa longueur axiale.

8. Ensemble formant rivet aveugle selon l'une quelconque des revendications précédentes, dans lequel ladite tige de mandrin (119) a un tronçon de diamètre réduit (135) adjacent audit épaulement (128).

9. Ensemble formant rivet aveugle selon l'une quelconque des revendications précédentes, dans lequel ledit diamètre maximum de ladite tige de mandrin (126) est égal au diamètre extérieur de ladite tige (106).
